# EUROPEAN PATENT SPECIFICATION

(11) **EP 3 026 312 B1**
(45) Date of publication and mention of the grant of the patent: **24.10.2018**
(21) Application number: 14829248.5
(22) Date of filing: 24.06.2014
(51) Int. Cl.: F16K 47/02, F16K 1/34, F16K 15/06

(54) **CONTROL VALVE**
REGELVENTIL
VANNE DE RÉGULATION

(30) Priority: 23.07.2013 JP 2013152595
(43) Date of publication of application: 01.06.2016
(73) Proprietor: KYB Corporation, Tokyo 105-6111 (JP)
(72) Inventor: NAKAMURA, Yoshinari, Tokyo 105-6111 (JP)
(74) Representative: Grünecker Patent- und Rechtsanwälte PartG mbB
(86) International application number: PCT/JP2014/066696
(87) International publication number: WO 2015/012047

(56) References cited:
- JP-A- H1 037 804
- JP-A- H1 137 311
- JP-A- 2005 500 484
- JP-A- 2007 032 979
- JP-A- 2007 032 980
- JP-A- 2007 292 148
- JP-U- H0 287 178
- JP-U- S6 246 864
- US-A- 2 927 737
- US-A- 5 927 323
- US-A1- 2011 005 618
- US-B1- 6 173 912

## Description

### TECHNICAL FIELD

The present invention relates to a control valve for controlling the flow of fluid according to the preamble of independent claim 1.

### BACKGROUND ART

US 5 927 323 A discloses a pressure control valve, wherein a valve element includes a first tapered portion having a smaller taper angle than a valve seat, and a second tapered portion having a larger taper angle than a valve seat. Thus, a seat portion to be rest on an intermediate portion of the valve seat is formed on an intersecting portion between the first and second tapered portions.

In a plate valve for dosing liquids known from US 6 173 912 B1, a valve plate abuts a valve seat in a closed condition and a seal gap is formed in an open condition, which gap has a cross-section that is one of constant and decreasing in a direction of flow of a liquid. This guarantees that an expansion of the seal gap area does not occur with increasing radius, given a set of the liquid from the interior outward.

According to the fuel injection valve of US 2 927 737 A, the conical angles of the surfaces of a valve body, and a valve needle positioned in the valve body differ in front of and also behind the area of seating engagement of the needle in the valve body, by a maximum of no more than 20° on the fuel supply side of the area of seating and by 0.5° to 4° on the fuel discharge side of the area of seating.

In a fuel filling system for taking out fuel gas from a supply source of high-pressure fuel gas and filling it into a fuel tank, noise may be generated from a control valve such as a check valve disposed in a passage when the fuel gas flows at a high speed in the passage.

As a measure against this, JP 2001 099340 A discloses a check valve including an air damper in a valve body and configured to suppress the vibration of the valve body by resistance applied by the air damper.

JP 2011 080571 A discloses a check valve including a guide ring held in sliding contact with a shaft portion of a valve body and configured to suppress the vibration of the valve body by sliding resistance applied by the guide ring.

### SUMMARY OF INVENTION

However, in such control valves, a vortex may be generated at a downstream side of the valve body and noise may be generated from a gas flow itself when gas of a high pressure and a large flow rate flows at a high speed.

The present invention aims to reduce noise of a control valve.

This aim is achieved by the provision of the control valve for controlling the flow of liquid which is defined and characterized in general in independent claim 1.

According to one aspect, a control valve for controlling the flow of fluid includes a seat portion through which the fluid passes a poppet which has a valve body portion and is configured to move relative to the seat portion; and a poppet throttle passage defined between the seat portion and the valve body portion. The poppet throttle passage is formed to gradually increase a flow passage area in a horizontal cross-section perpendicular to center axes of the seat portion and the valve body portion from an upstream side to a downstream side.

### BRIEF DESCRIPTION OF DRAWINGS

FIG. 1 is a sectional view of a control valve according to a first embodiment of the present invention,
FIG. 2 is a sectional view showing a part of the control valve according to the first embodiment of the present invention,
FIG. 3 is a graph showing a relationship of a valve stroke and a flow passage cross-sectional area according to the first embodiment of the present invention, and
FIG. 4 is a sectional view of a part of a control valve according to a second embodiment which is not part of the present invention.

### DESCRIPTION OF EMBODIMENTS

Hereinafter, embodiments are described with reference to the accompanying drawings.

### (First Embodiment)

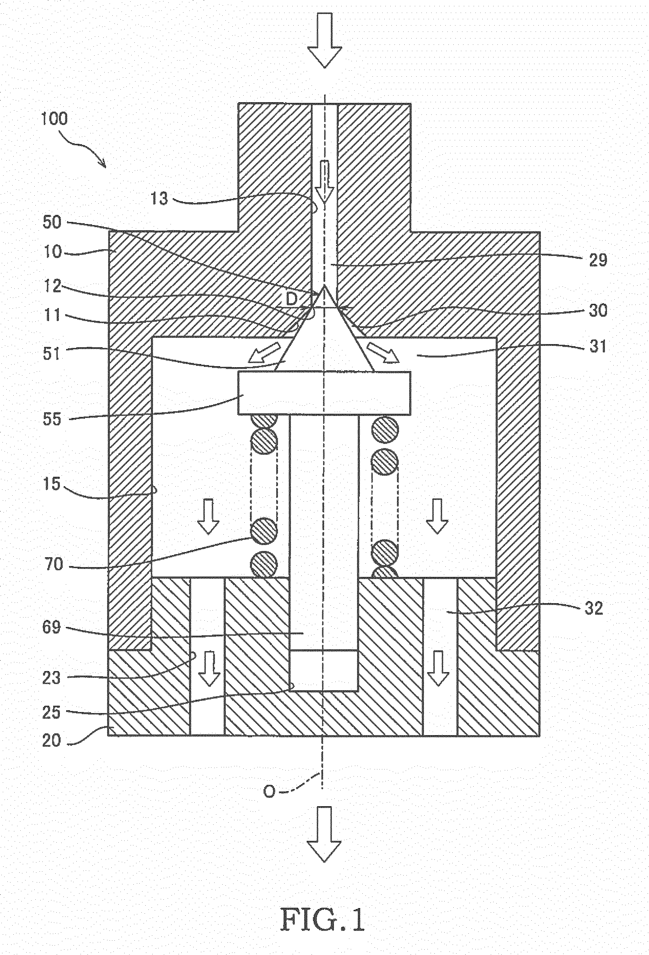

A control valve 100 shown in FIG. 1 is used as a check valve disposed in a passage for fuel gas in a fuel filling system for filling high-pressure fuel gas (hereinafter, referred to as gas) supplied from a supply source into a fuel tank.

The control valve 100 includes a valve housing 10 with a seat portion 11 through which the gas passes, a poppet 50 with a valve body portion 51 which moves relative to the seat portion 11, and a spring 70 configured to bias the valve body portion 51 in a valve closing direction to come into contact with the seat portion 11.

When the control valve 100 is opened, the poppet 50 moves downward in FIG. 1 against a biasing force of the spring 70 according to an increase in gas pressure introduced from the supply source. In this way, the valve body portion 51 is separated from the seat portion 11 and the gas from the supply source flows as indicated by arrows in FIG. 1.

The control valve 100 includes, as a casing thereof, the hollow cylindrical valve housing 10 and a disc-like cover 20 for closing an opening end of the valve housing 10. The poppet 50 and the spring 70 are housed between the valve housing 10 and the cover 20.

An inlet port 13 in the form of a cylindrical surface, the seat portion 11 in the form of a conical surface and an inner wall portion 15 in the form of a cylindrical surface are respectively coaxially formed about a center axis O inside the valve housing 10. The inlet port 13 defines an inlet flow passage 29 to which the gas is introduced from the supply source. A poppet throttle passage 30 for guiding the gas to a downstream side is defined between the seat portion 11 and the valve body portion 51. The inner wall portion 15 defines a poppet downstream passage 31 for guiding the gas at a downstream side of the poppet throttle passage 30.

The cover 20 is formed into a disc shape centered on the center axis O and fitted and fixed to an opening end of the inner wall portion 15 of the valve housing 10. The cover 20 includes a guide hole 25 open in a central part of the cover 20 and a plurality of outlet ports 23 defining outlet flow passages 32. The guide hole 25 is formed into a cylindrical surface centered on the center axis O. The outlet ports 23 are provided at equal intervals on a circumference centered on the center axis O.

The poppet 50 includes the conical valve body portion 51, a disc-like spring receiving portion 55 formed to be connected to a downstream side of the valve body portion 51 and a column-shaped rod portion 69 formed to be connected to a downstream side of the spring receiving portion 55. The valve body portion 51, the spring receiving portion 55 and the rod portion 69 are coaxially formed about the center axis O.

The rod portion 69 of the poppet 50 is slidably inserted into the guide hole 25 of the cover 20. In this way, the poppet 50 is supported to move along an axial direction of the poppet 50, in which the center axis O extends, relative to the valve housing 10. Thus, the coaxiality of the valve body portion 51 with the seat portion 11 is ensured.

The coiled spring 70 is compressed and interposed between the spring receiving portion 55 and the cover 20 and presses the poppet 50 against the seat portion 11 of the valve housing 10.

In the control valve 100, a flow passage cross-sectional area of the poppet throttle passage 30 defined between the seat portion 11 and the valve body portion 51 increases and decreases as the poppet 50 is displaced along a direction of the center axis O, whereby a flow rate of the gas passing in the poppet throttle passage 30 is controlled.

Each of the seat portion 11 and the valve body portion 51 is formed to have a tapered vertical cross-sectional shape centered on the center axis O and be enlarged in diameter from an upstream side toward a downstream side.

In a vertical cross-section, the seat portion 11 is formed to be enlarged in diameter while being inclined at a larger angle than the valve body portion 51 of the poppet 50 with respect to the center axis O. An annular seat portion upstream end 12 is formed on an upstream end of the seat portion 11 connected to the inlet port 13.

When the control valve 100 is closed, the valve body portion 51 is seated on the seat portion upstream end 12, thereby closing the inlet flow passage 29 and the poppet throttle passage 30. When the control valve 100 is opened, the valve body portion 51 is separated from the seat portion 11, thereby guiding the gas from the supply source to the poppet throttle passage 30.

Here, generally, when gas of a high pressure and a large flow rate is introduced in a control valve, the flow of the gas passing through a valve body portion of a poppet may become turbulent and a jet flow including a vortex may be generated at a downstream side of the valve body portion. High-frequency noise may be generated from such a jet flow or the valve body portion may repeatedly collide with a seat portion to generate noise due to the vortex.

As a measure against this, the poppet throttle passage 30 is formed to gradually increase a flow passage area in a horizontal cross-section perpendicular to the center axis O of the seat portion 11 and the valve body portion 51 of the poppet 50 from an upstream side to a downstream side. The gas flowing in the poppet throttle passage 30 is rectified by flowing along the inner peripheral surface of the seat portion 11 and the outer peripheral surface of the valve body portion 51. As just described, the poppet throttle passage 30 functions as a rectifying passage for rectifying the passing gas.

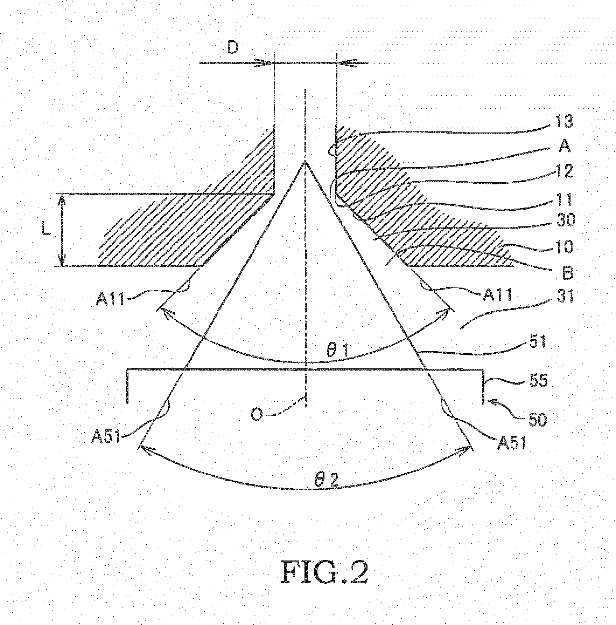

In a vertical cross-section including the center axis O shown in FIG. 2, a valve seat angle θ1 between two virtual lines A11 extending along the inner peripheral surface of the seat portion 11 is larger than a valve body angle θ2 between two virtual lines A51 extending along the outer peripheral surface of the valve body portion 51. In this way, the poppet throttle passage 30 is formed to gradually increase a flow passage width and a flow passage cross-sectional area perpendicular to the center axis O from the upstream side to the downstream side.

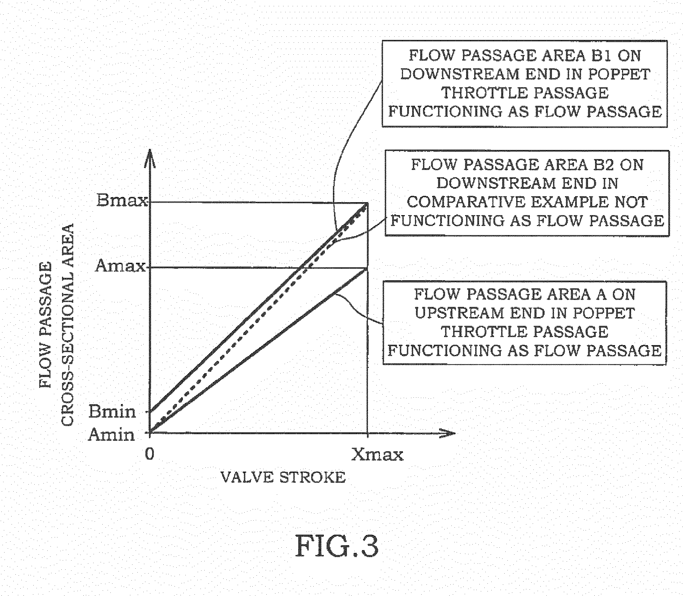

FIG. 3 is a graph showing a relationship of a flow passage area of the poppet throttle passage 30 functioning as the rectifying passage in a direction perpendicular to the center axis O and a valve stroke X which is a movement amount of the poppet 50 in the axial direction (direction of the center axis O). The flow passage area on an upstream end (inlet) of the poppet throttle passage 30 is referred to as a flow passage area A and that on a downstream end (outlet) is referred to as a flow passage area B1.

In FIG. 3, broken line indicates a flow passage area B2 on a downstream end of a poppet throttle passage so formed as a comparative example that a valve seat angle θ1 of a seat portion and a valve body angle θ2 of a valve body portion are equal. Thus, the poppet throttle passage as the comparative example does not function as a rectifying passage. As shown in FIG. 3, in the comparative example, a ratio of a flow passage area A on an upstream end to the flow passage area B2 on the downstream end of the poppet throttle passage (A/B2) is relatively small in an opening range where the valve stroke X is small. In the case of this comparative example, a vortex is easily generated from the poppet throttle passage to the poppet downstream passage in the opening range where the valve stroke X is small.

Contrary to this, in the control valve 100, the flow passage area A on the upstream end (inlet) of the poppet throttle passage 30 is smaller than the flow passage area B1 on the downstream end (outlet) of the poppet throttle passage 30 over the entire stroke region as shown in FIG. 3. A ratio of the flow passage area A on the upstream end to the flow passage area B1 on the downstream end of the poppet throttle passage 30 (A/B1) is larger than in the comparative example in the opening range where the valve stroke X is small.

The flow of the gas passing through the control valve 100 is throttled by grater throttling amount in the opening range where the valve stroke X is small than in an opening range where the valve stroke X is large. Thus, in the opening range where the valve stroke X is small, the gas flowing from the poppet throttle passage 30 to the poppet downstream passage 31 easily creates a jet flow including a vortex. In the control valve 100, the ratio of the flow passage area A on the upstream end to the flow passage area B1 on the downstream end of the poppet throttle passage 30 (A/B1) is larger than in the comparative example in the opening range where the valve stroke X is small as described above. Thus, a pressure of the gas flowing in the poppet throttle passage 30 is appropriately reduced from the upstream side to the downstream side in the opening range where the valve stroke X is small, thereby suppressing the generation of a vortex from the poppet throttle passage 30 to the poppet downstream passage 31.

A length L of the poppet throttle passage 30 in the direction of the center axis O of the seat portion 11 is formed to be larger than a minimum opening diameter D of the seat portion 11. In this way, the poppet throttle passage 30 has the sufficient flow passage length L, thereby ensuring a flow passage length along which the gas flows along the inner peripheral surface of the seat portion 11 and the outer peripheral surface of the valve body portion 51 and obtaining a rectifying action for suppressing the generation of a vortex in the gas.

The operation of the control valve 100 is described below.

In a state where a pressure of the gas introduced to the inlet flow passage 29 from the supply source is lower than a set valve opening pressure, the valve body portion 51 is held in contact with the seat portion 11 by the biasing force of the spring 70 to close between the inlet flow passage 29 and the poppet throttle passage 30.

When the pressure of the gas introduced to the inlet flow passage 29 from the supply source rises above the valve opening pressure, the valve body portion 51 is separated from the seat portion 11 against the biasing force of the spring 70 to open between the inlet flow passage 29 and the poppet throttle passage 30. In this way, the gas from the supply source flows through the inlet flow passage 29, the poppet throttle passage 30, the poppet downstream passage 31 and the outlet flow passages 32 as indicated by arrows in FIG. 1.

In the poppet throttle passage 30, the flow passage width and the flow passage cross-sectional area between the seat portion 11 and the valve body portion 51 are gradually increased from the upstream side to the downstream side. Thus, the pressure of the gas passing in the poppet throttle passage 30 is gradually reduced from the upstream side to the downstream side and the generation of a vortex from the poppet throttle passage 30 to the poppet downstream passage 31 is suppressed.

In the opening range where the valve stroke X of the poppet 50 is small, a flow velocity of the gas passing in the poppet throttle passage 30 tends to increase to generate a vortex. Contrary to this, the generation of a vortex in a jet flow flowing out from the poppet throttle passage 30 to the poppet downstream passage 31 is suppressed since the ratio of the flow passage area A on the upstream end to the flow passage area B1 on the downstream end of the poppet throttle passage 30 is ensured to be sufficiently high in the control valve 100.

Further, an experiment was conducted to measure a level of noise generated from the control valve 100 by changing an angle difference (θ1-θ2). As a result of this experiment, it was found that the noise level was suppressed low in a range where the angle difference (θ1-θ2) was not larger than 1.5°. On the other hand, it was found that the noise level drastically rose when the angle difference (θ1-θ2) became larger than 1.5°. On the basis of the result of this experiment, the angle difference (θ1-θ2) is set in a range of not larger than 1.5°.

According to the above first embodiment, the following functions and effects are exhibited.

[1] The control valve 100 includes the seat portion 11 in the form of a conical surface along which the gas (fluid) passes, the poppet 50 which includes the valve body portion 51, the poppet 50 configured to move along the direction of the center axis O of the seat portion 11, and the poppet throttle passage 30 defined between the seat portion 11 and the valve body portion 51, and the poppet throttle passage 30 is formed to gradually increase the flow passage area in the horizontal cross-section perpendicular to the center axis O of the seat portion 11 and the valve body portion 51 from the upstream side to the downstream side.

On the basis of the above configuration, in the control valve 100, the gas is rectified by flowing along the inner peripheral surface of the seat portion 11 and the outer peripheral surface of the valve body portion 51 of the poppet 50 in the poppet throttle passage 30 whose flow passage area is gradually increased from the upstream side to the downstream side. Thus, the generation of a vortex in a jet flow flowing out to the downstream side from the poppet throttle passage 30 is suppressed.

In this way, the generation of high-frequency sound from the jet flow flowing out to the downstream side from the poppet throttle passage 30 can be prevented. Further, the vibration of the poppet due to a pressure fluctuation caused by a vortex can be suppressed and the generation of noise by the repeated collision of the valve body portion 51 with the seat portion 11 can be prevented. As just described, the noise of the control valve 100 can be reduced.

[2] The poppet throttle passage 30 is so formed that the valve seat angle θ1 between the two virtual lines A11 extending along the inner peripheral surface of the seat portion 11 is larger than the valve body angle θ2 between the two virtual lines A51 extending along the outer peripheral surface of the valve body portion 51 in the vertical cross-section of the seat portion 11 and the valve body portion 51 of the poppet 50 including the center axis O.

On the basis of the above configuration, in the control valve 100, the pressure of the gas flowing in the poppet throttle passage 30 is gradually reduced to enhance an effect of rectifying the flow of the gas and suppress resistance applied to the flow of the gas.

[3] The poppet throttle passage 30 is so formed that the angle difference (θ1-θ2) between the valve seat angle θ1 and the valve body angle θ2 is in the range of not larger than 1.5°.

On the basis of the above configuration, in the control valve 100, the flow passage width and the flow passage cross-sectional area of the poppet throttle passage 30 appropriately change from the upstream side toward the downstream side. Thus, the pressure of the gas flowing in the poppet throttle passage 30 is moderately reduced to obtain the effect of rectifying the flow of the gas, whereby the generation of a vortex in a jet flow flowing out to the downstream side from the poppet throttle passage 30 is suppressed.

[4] The length L of the poppet throttle passage 30 in the direction of the center axis O of the seat portion 11 is larger than the minimum opening diameter D of the seat portion 11.

On the basis of the above configuration, in the control valve 100, a flow passage length necessary to rectify the gas flowing in the poppet throttle passage 30 in the process of flowing along the inner peripheral surface of the seat portion 11 and the outer peripheral surface of the valve body portion 51 is ensured. Thus, the generation of a vortex in a jet flow flowing out to the downstream side from the poppet throttle passage 30 is suppressed.

### (Second embodiment)

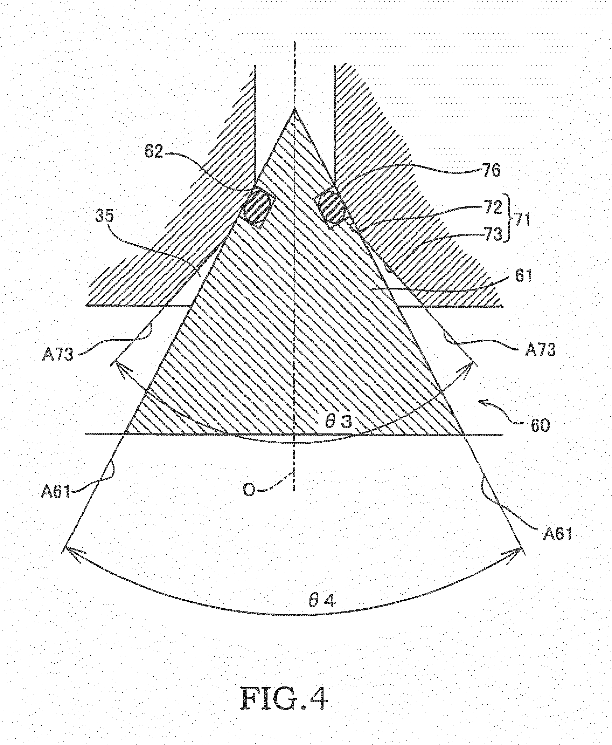

Next, a second embodiment, which is not part of the present invention, is described with reference to FIG. 4. The following description is centered on points of difference from the above first embodiment and the same components as in the control valve 100 of the above first embodiment are denoted by the same reference signs and not described.

In the control valve 100 of the above first embodiment, the seat portion upstream end 12 on which the valve body portion 51 of the poppet 50 is to be seated is formed on the upstream end of the seat portion 11. Contrary to this, a control valve according to a second embodiment is provided with a seal ring 76 mounted on the outer periphery of a valve body portion 61 and a rectifying wall portion 71 including a seat portion 73 and a valve seat portion 72 provided at an upstream side of the seat portion 73 and configured to come into contact with the seal ring 76.

The valve body portion 61 is formed with an annular housing groove 62 open on the outer periphery thereof. The seal ring 76 is housed in the housing groove 62.

The rectifying wall portion 71 includes the seat portion 73 and the valve seat portion 72 provided at the upstream side of the seat portion 73 and configured to come into contact with the seal ring 76. When the control valve is closed, the seal ring 76 comes into contact with the valve seat portion 72, thereby enhancing the sealability of the control valve.

A valve seat angle θ3 between two virtual lines A73 extending along the inner peripheral surface of the seat portion 73 is larger than a valve body angle θ4 between two virtual lines A61 extending along the outer peripheral surface of the valve body portion 61. A poppet throttle passage 35 is defined between the seat portion 73 of the rectifying wall portion 71 and the valve body portion 61.

The poppet throttle passage 35 is formed to gradually increase a flow passage width and a flow passage area perpendicular to a center axis O from an upstream side to a downstream side. In this way, gas flowing in the poppet throttle passage 35 is rectified by flowing along the inner peripheral surface of the seat portion 73 and the outer peripheral surface of the valve body portion 61, thereby suppressing the generation of a vortex.

According to the above second embodiment, the above functions and effects [1] to [4] are exhibited as in the first embodiment and, in addition, the following effects and functions are exhibited.

[5] The control valve includes the valve seat portion 72 at the upstream side of the seat portion 73 and the seal ring 76 is mounted on the outer periphery of the valve body portion 61 and comes into contact with the valve seat portion 72.

On the basis of the above configuration, in the control valve, sealability when the valve is closed is ensured via the seal ring 76, and the generation of a vortex in a jet flow flowing out to the downstream side from the poppet throttle passage 35 is suppressed and the generation of noise due to a vortex is suppressed when the valve is opened.

In each of the above embodiments, the poppet throttle passage 30, 35 is provided over the entire circumference of the poppet 50, 60. Without limitation to this, a plurality of slit-like poppet throttle passages may be provided in a poppet.

Further, the control valve 100 of each of the above embodiments is used as the check valve disposed in the passage for the fuel gas in the fuel filling system. Without limitation to this, it may be used as a check valve or a relief valve disposed in a circuit, in which gas of a high pressure and a large flow rate flows, in another machine or facility. Further, although the fluid flowing through the control valve 100 has been the fuel gas, it may be another gas or liquid without limitation to this.

## Claims

1. A control valve (100) for controlling the flow of fluid, comprising:
a seat portion (11) through which the fluid passes, the seat portion (11) having an upstream end (12) and a downstream end;
a poppet (50) which has a valve body portion (51) and is configured to move relative to the seat portion (11); and
a poppet throttle passage (30) defined between the seat portion (11) and the valve body portion (51),
wherein:
a valve seat angle (θ₁) between two virtual lines (A11) extending along the inner peripheral surface of the seat portion (11) is larger than a valve body angle (θ₂) between two virtual lines (A51) extending along the outer peripheral surface of the valve body portion (51) in a vertical cross-section including the center axis (O) of the seat portion (11) and the valve body portion (51),
**characterized in that**
the valve body portion (51) has a constant conical surface and is configured to be seated on the upstream end (12) of the seat portion,
an angle difference (θ₁-θ₂) between the valve seat angle (θ₁) and the valve body angle (θ₂) is in a range of not larger than 1.5°,
the poppet throttle passage (30) is formed to gradually increase a flow passage area in a horizontal cross-section perpendicular to center axes (O) of the seat portion (11) and the valve body portion (51) from the upstream end (12) to the downstream end of the seat portion (11), and
a length (L) of the poppet throttle passage (30) in a direction of the center axis (O) of the seat portion (11) is larger than an opening diameter (D) of the upstream end (12) of the seat portion (11).

## Patentansprüche

1. Regelventil (100) zur Steuerung des Durchflusses eines Fluids, mit:
einem Sitzbereich (11), der von dem Fluid durchströmt wird, wobei der Sitzbereich (11) ein strömungsvorgeordnetes Ende (12) und ein strömungsnachgeordnetes Ende hat;
einem Kolben (50), der einen Ventilhauptteil (51) hat und relativ zu dem Sitzbereich (11) bewegbar ist; und
einem Kolbendrosseldurchgang (30), der zwischen dem Sitzbereich (11) und dem Ventilhauptteil (51) gebildet ist,
wobei:
ein Ventilsitzwinkel (θ₁) zwischen zwei gedachten Linien (A11), die entlang der Innenumfangsfläche des Sitzbereichs (11) verlaufen, größer ist als ein Ventilhauptteilwinkel (θ₂) zwischen zwei gedachten Linien (A51), die entlang der Außenumfangsfläche des Ventilhauptteils (51) in einem vertikalen Querschnitt, der die Mittelachse (O) des Sitzbereichs (11) und des Ventilhauptteils (51) enthält, verlaufen,
**dadurch gekennzeichnet, dass**
der Ventilhauptteil (51) eine gleichbleibende konische Oberfläche hat und ausgebildet ist, auf dem strömungsvorgeordneten Ende (12) des Sitzbereichs aufzuliegen,
eine Winkeldifferenz (θ₁- θ₂) zwischen dem Ventilsitzwinkel (θ₁) und dem Ventilhauptteilwinkel (θ₂) in einem Bereich liegt, der nicht größer als 1,5° ist,
der Kolbendrosseldurchgang (30) so ausgebildet ist, dass eine Durchflussfläche in einem horizontalen Querschnitt senkrecht zur Mittelachse (O) des Sitzbereichs (11) und des Ventilhauptteils (51) von dem strömungsvorgeordneten Ende (12) zu dem strömungsnachgeordneten Ende des Sitzbereichs (11) graduell zunimmt, und
eine Länge (L) des Kolbendrosseldurchgangs (30) in einer Richtung der Mittelachse (O) des Sitzbereichs (11) größer ist als ein Öffnungsdurchmesser (D) des strömungsvorgeordneten Endes (12) des Sitzbereichs (11).

## Revendications

1. Soupape de contrôle (100) pour un contrôle de l'écoulement d'un fluide, comprenant :
une partie de siège (11) à travers laquelle le fluide s'écoule, la partie de siège (11) présentant une extrémité amont (12) et une extrémité aval ;
une tulipe (50) qui présente une partie de corps de soupape (51) et est configurée pour se déplacer par rapport à la partie de siège (11) ; et
un passage d'obturation par tulipe (30) défini entre la partie de siège (11) et la partie de corps de soupape (51),
dans lequel :
un angle de siège de soupape (θ₁) entre deux lignes virtuelles (A11) s'étendant le long de la surface périphérique intérieure de la partie de siège (11) est supérieur à un angle de corps de soupape (θ₂) entre deux lignes virtuelles (A51) s'étendant le long de la surface périphérique extérieure de la partie de corps de soupape (51) dans une section transversale verticale incluant l'axe central (O) de la partie de siège (11) et la partie de corps de soupape (51),
**caractérisé en ce que**
la partie de corps de soupape (51) présente une surface conique constante et est configurée pour venir s'appuyer sur l'extrémité amont (12) de la partie de siège,
une différence angulaire (θ₁-θ₂) entre l'angle de siège de soupape (θ₁) et l'angle de corps de soupape (θ₂) s'inscrit dans une plage de moins de 1,50°,
le passage d'obturation par tulipe (30) est formé pour augmenter progressivement une zone de passage d'écoulement dans une section transversale horizontale perpendiculaire à l'axe central (O) de la partie de siège (11) et la partie de corps de soupape (51) de l'extrémité amont (12) à l'extrémité aval de la partie de siège (11), et
une longueur (L) du passage d'obturation par tulipe (30) dans une direction de l'axe central (O) de la partie de siège (11) est supérieure à un diamètre d'ouverture (D) de l'extrémité amont (12) de la partie de siège (11).
